# EUROPEAN PATENT APPLICATION

(11) **EP 1 249 981 A1**
(43) Date of publication of application: **16.10.2002**
(21) Application number: 01650037.3
(22) Date of filing: 02.04.2001
(51) Int. Cl.: H04L 29/06, H04L 12/58

(54) **A security service system and method**

(71) Applicant: NuMeme Limited, Dublin 18 (IE)
(72) Inventor: Dunnion, Dermot, Dublin 18 (IE); Dunnion, Brian, Foxrock, Dublin 18 (IE)
(74) Representative: Weldon, Michael James

(57) **Abstract**

A server downloads a program to a client for secure services such as secure email messaging. A one-time session key is generated by both the server and the client. There are a number of options for the client to obtain private keys, and where it is generated by the client it may be sent to the server for an escrow service. Time-varying authentication is achieved by the server transmitting a random value to the client and the client uses this value to transmit a password to the server. The server establishes a pre-registered state for the client to allow a message to be sent to a non-registered recipient. The server also downloads a library of components which are subsequently used by applications to generate user displays.

## Description

### Introduction

The invention relates to provision of security services to users.

There have been a number of changes in the use of email in the last few years. Email has become a common tool for business communication. Furthermore, companies, large and small, are communicating with an increasing number of external partners as access to email has become almost ubiquitous. The success of Hotmail™ and other web-based email services has shown that users quickly accept and use such services provided they are easy to use, functional and reliable. However, email is innately insecure and therefore is not suitable for exchange of confidential business documents.

Information stored in computer files can have great commercial, political or personal value. However, such information is usually stored in plain form on computers and can be stolen with physical or network access to the computer itself. Therefore users require additional security services such as encrypted file storage.

As companies increasingly use the world-wide-web for exchange of information and commercial transactions, there is a requirement to deploy customised, secure applications specific to their business. Examples of this are: online banking, stockbroker transactions, online legal and medical records and online purchasing.

The need for securing information and communications is not new and approaches to securing data files and email traffic have been devised. However, all the current approaches suffer from serious limitations. The approaches in use today are:
- Virtual Private Networks - email traffic can be secured by securing all the network traffic between two sites. However, configuration is required at each end and as the number of sites increases, the amount of configuration work increases exponentially.
- Secure Mail Software - the use of Lotus and Microsoft products on the desktop is widespread, as is the use of Microsoft and Netscape's web-browsers. These products have inbuilt secure email capabilities. However, the level of security is typically poor (40-bit encryption) and configuration to enable the secure email functionality is difficult.
- Secure File Software - a freeware application called Scramdisk exists which allows users to encrypt and decrypt files on their local hard disk. The security provided is excellent, however the application is designed for use by technologists. The user is presented with a large number of options, which require a cryptography background to understand. Furthermore, the application must be installed on user's PCs which requires scare and expensive technically skilled resources.
- A major part of the problem with security software is key management; i.e. the creation, management, use and destruction of public/private key pairs. The technology used, Public Key Infrastructure (PKI) is complex, difficult to use and requires too much cost and effort for the reward of encrypting files and/or email.
- A solution that is commonly used is to use the password-protection facility in most productivity applications (spreadsheets, word processors, etc.) to protect information. Unfortunately, the level of security provided by these applications is very poor.
- A company called Hush Communications have developed a web-based secure email system described in US Patent Specification No. 6154543. Disadvantages of this approach are that the secrecy of a user's password is the only protection against eavesdropping. It is therefore vulnerable to "keyboard sniffing" attacks. In particular, the user cannot ensure that a physical item such as a floppy disk, memory-card etc. is required to access information. Furthermore, public keys are not distributed as certificates, thereby preventing support of the S/MIME secure mail standards. Finally, it is specifically a secure email service only and does not support other security services such as file encryption.

The above approaches exhibit a number of different problems as follows:
- High Costs
   VPNs and Secure Mail software require purchase of new hardware and software.
   Installation of such solutions requires skilled and expensive staff, particularly when software must be installed on every client machine. Finally, they require ongoing operational support, which again requires skilled and expensive staff.
- Require Software Installation
   Secure Mail and file encryption solutions require a "fat-client" which must be installed on every user's machine. The typical user is not able to do this themselves and therefore installation requires skilled, scarce MIS resources.
- Poor Security
   The cryptography used in password protection of documents is weak. Numerous utilities exist to allow user's to recover the password for such documents. A number of web-based "secure" email services exist. In general, these have weak security.
- Difficult-to-Use
   Pretty Good Privacy (PGP) is a well-known program for secure messaging.
   Scramdisk is a well-known program for file encryption. However, both are designed by technologists, for use by technologists and are not user-friendly enough for many business users.
   Most current web-based email services have a similar user-interface. User feedback indicates that this is awkward and non-intuitive to use and looks very different from the standard email software used on the desktop. This in turn creates a barrier to use, so that users often tend to use web-based services only when necessary rather than by choice.
- Proprietary Security Mechanisms
   Even when existing solutions solve the problems of cost, installation, security and usability, they do so by employing proprietary security mechanisms. Secure email format standards (S/MIME RFCs) exist that have been validated by RSA, Baltimore and Tumbleweed and which have been adopted by Microsoft and Netscape. Proprietary solutions do not interoperate with the standards and hence provide a very-limited user base.
- Lack of Flexibility
   There is an increasing need for users to access a wide range of security services. These services include general-purpose ones such as secure email and secure file storage as well as business-specific services such as an online banking application, online stock trading, legal records access and medical records access. The web-based solutions available today are all focussed on providing a single security service which does not address the need for an easy-to-use framework to enable businesses to rapidly create new security services.

It is therefore an object of the invention to provide a framework for provision of security services to end users.

It is furthermore an object to provide for improved security for email communication.

It is furthermore an object to provide improved security for data stored in electronic form which is susceptible to being stolen or illegally accessed.

### Statements of Invention

According to the invention, there is provided a method for managing secure communication services in a client/server environment, the method comprising the steps of:-
the server downloading a program to the client and the client using said program to communicate with the server to avail of secure services.

In one embodiment, the program is a Java applet, and the server operations are according to Java servlets.

In one embodiment, a session key is generated for encryption of sensitive data communicated between the client and the server.

In one embodiment, both the client and the server generate and send a one-time session key.

In one embodiment, the session key is generated according to the Diffie-Hellman algorithm.

In another embodiment, the client allows the user to select one of a plurality of options for obtaining a private key.

In one embodiment, the options are:
(a) the client generating and encrypting a private key and sending to the server for storage;
(b) the client generating a private key, transmitting it to the server, and the server storing it; and
(c) the client generating, encrypting, and storing a private key.
   In one embodiment, option (c) comprises the further step of the client transmitting the encrypted private key to the server for an escrow service.

In another embodiment, the client allows the user to select one of a plurality of options for obtaining a public key.

In one embodiment, the options are:
(a) the server sending the public key in a plain format, and
(b) the server sending the public key as a key certificate and wherein the key data is signed.

In one embodiment, the server transmits a random value to the client during login or other sensitive operation, and the client uses said value to transmit a password to the server to provide time-varying authentication.

In one embodiment, the secure service is an email messaging service.

In a further embodiment, the server maps a user's existing email address to a new address.

In one embodiment, the server allows a message to be sent to a non-registered recipient by registering after the sender sends the message.

In one embodiment, the server establishes a pre-registered state for the recipient.

In one embodiment, the server stores pending messages for the pre-registered state in encrypted form.

In another embodiment, the server notifies the recipient of pending messages using a separate link.

In one embodiment, the client is a handheld device such as a personal digital assistant (PDA) or mobile phone.

In a further embodiment, the secure service is a secure data storage service.

In one embodiment, the downloaded program is used by the client to generate a user interface of a type similar to that of a substantial located application such as an email messaging application, and the program comprises a toolkit of user interface primitives such as windows, frames, buttons, multi-column lists, button bars, and dialog boxes, and a client application calls these primitives.

In another embodiment, the program is a secure communications program which makes secure communication functions available to applications.

In one embodiment, an application sends data to a client communication manager, which in turn communicates securely with a sever communications manager, which in turn processes the application data itself or passes it to another server module.

According to another aspect, the invention provides a method of operating in a client/server environment comprising the steps of using an applet downloaded to a client web-browser for launching one or more windowed applications.

In one embodiment, the applications launched are determined by user registration details.

In one embodiment, functions available to an application are determined by user registration details.

According to a further aspect, the invention provides a method of operating a client system in a client/server environment, the method comprising the steps of:-
the client system downloading a library containing user-interface components, and
the client also downloading one or more applications which call said components and use them to generate user displays.

### In one embodiment, :-

the client downloads a library containing some or all of cryptographic primitive functions, user-interface components, protocol primitive functions, session-management functions and cryptographic key-management functions, and
the client also downloads one or more applications which call said library functions and use them to provide cryptography-based services

In one embodiment, the library functions are embedded in an application.

According to another aspect, the invention provides a server comprising means for performing server operations in a method as described above.

### Detailed Description of the Invention

The invention will be more clearly understood from the following description of some embodiments thereof, given by way of example only with reference to the accompanying drawings in which:-
Fig. 1 is a flow chart illustrating address mapping;
Fig. 2 is a flow chart illustrating new user processing.

Security functionality is provided for a user of a client system communicating with a server such as a Web server. There is no need for the client system to store programs as Java applets are downloaded at the start of a session . One applet is for user registration, a second provides basic security services such as user authentication, cryptographic and user-interface toolkits, key management and secure client-server communications. Within the second applet, an interface is provided enabling applications to access the framework services and provide end-user applications utilising the framework services. Two applications, which have been implemented, are secure email and secure file storage. The server-side functionality is provided by Java servlets running on a Web server communicating with a mail server and a file server.

Each user has one or more pairs of public and private keys. The client system uses a private key to decrypt messages encrypted with it's corresponding public key and uses a public key to decrypt messages encrypted with it's corresponding private key. The invention provides three alternative mechanisms for distribution and management of private keys. These all offer different strengths and weaknesses and different types of users and applications will use different private key distribution schemes.
1. Server-based, password-encrypted scheme. In this scheme, the private key is encrypted with the user's password after generation. This encrypted private key is then sent to the server for storage. The encrypted private key is downloaded to the client machine after login authentication and decrypted by the client when needed for reading mail, decrypting files or signing mail. It is best used in an environment where keyboard monitoring ("sniffing") is not possible.
2. Server-based, non-encrypted scheme. In this scheme the private key is encrypted by the public key of a domain-owner and then sent to the server for storage. When the client requires the private key, it is decrypted using the domain-owner private key and downloaded to the client. This scheme is best used where keyboard monitoring is not possible and where the user wishes to be able recover email and files after losing their password.
3. Client-based, password-encrypted scheme. In this scheme, the private key is encrypted with the user's password after generation. It is then stored on local storage such as hard disk, floppy disk, smart card, memory-card, etc. When the client requires the private key, the local copy is read and decrypted. For speed reasons, the local copy may be read into memory when the client is initialised and then decrypted when needed. This scheme is best used when keyboard sniffing is a possibility, in which case the key-file should be kept on removable media, such as floppy-disk, ZIPdisk, USB dongle, smart-card, memory-card etc.

### Public Key Distribution

After generation (on the client) the user's public key(s) are sent to the server for storage. When a user requires their own, or another user's, public key, it is download from the server. There are two formats for the public key downloaded to the client.
1. Raw Format. In this scheme, the public key is sent with no extra information. This is appropriate for situations where speed is of primary importance and network bandwidth is limited.
2. Certificate Format. In this scheme, the public key is sent as a public key certificate where it is digitally signed by one or more entities. This allows the key to be validated and revoked. It also allows a chain of trust to be verified, validating the key owner to have specific authorisation (e.g. issue purchase orders, issue account credits, etc.). There are two widely used Key Certificate formats, PGP and X.509. The invention can use both formats but X.509 is preferred as it is a public standard and compatible with the S/MIME secure email standards.

### Key Escrow

As described above, there are good reasons why a user may elect to have the private key stored locally. In this case, the system provides a key-escrow service for the user. After key generation the private key is stored as a file on a local storage medium. If this file is lost, the user has lost their private key and is unable to send or read email, decrypt files etc. During registration the user may opt to use the key escrow service, which allows the server to restore a lost copy of a user's private key. If the user so chooses, a copy of the private key file is sent to the server for storage. When a user loses their private key file, they can request a copy from the server. There are two implementations, one for individuals and one for organisations.
1. Individual Key Escrow. In this scheme a copy of the user's private key, encrypted by the user's password is saved on the server. On request, a floppy disk or other storage medium containing the key file is physically sent to the user. On receipt, the user can then access their secured data such as email and/or files.
2. Corporate Key Escrow. In this scheme, a copy of the user's private key encrypted by the public key of the corporate entity is saved on the server. On request the server will download the encrypted staff-member private key to the client where it is decrypted by the corporate entity's private key. It is then encrypted by a password and saved to local storage. This enables corporate entities to recover a staff member's private key if it is lost.

### Secured-Network Layer

SSL is used between the web-server and the client PC in order to allow authentication of the server to the client. This prevents other sites masquerading as the valid server. In theory SSL provides encryption of data and therefore confidentiality, however, we assume that the protection afforded by SSL is weak. Therefore, all communications between the applet (registration or login) and the server begin by using the Diffie-Hellman algorithm to exchange a session key which is used to encrypt sensitive information before it is transferred over the SSL connection. Other key-exchange algorithms may be used in place of Diffie-Hellman without altering the basic design. The use of Diffie-Hellman may be seen in detail in a following section, which describes the registration and logon protocols in detail.

### Time-Varying Authentication

When a user registers for the service, a hash of their password is sent to the server and stored. A common login protocol is then to send a username and password hash to the server for authentication. This has the advantage that it is believed infeasible to obtain the password from the hash value, so that someone eavesdropping on the line can see the hash value but not be able to determine the user password. However, there is nothing to prevent the eavesdropper sending the username and hash-value themselves in what is called a replay-attack. To prevent this the server sends a random value to the client during logon. The client then sends the hash of the password plus the random value to the server where it is validated. The advantage of this is that the information sent by the client is different each time, thus making a replay-attack infeasible.

In addition, some users are aware of keyboard-sniffer software and wish to protect against it. If the user avails of this facility, they are asked to register multiple passwords with a name identifying each. During authentication, they are asked for a randomly chosen password from their list. If the user enters the incorrect password, it is assumed that an attack on the user's account is in progress and the user must enter a number of passwords to access their account.

### Address Mapping

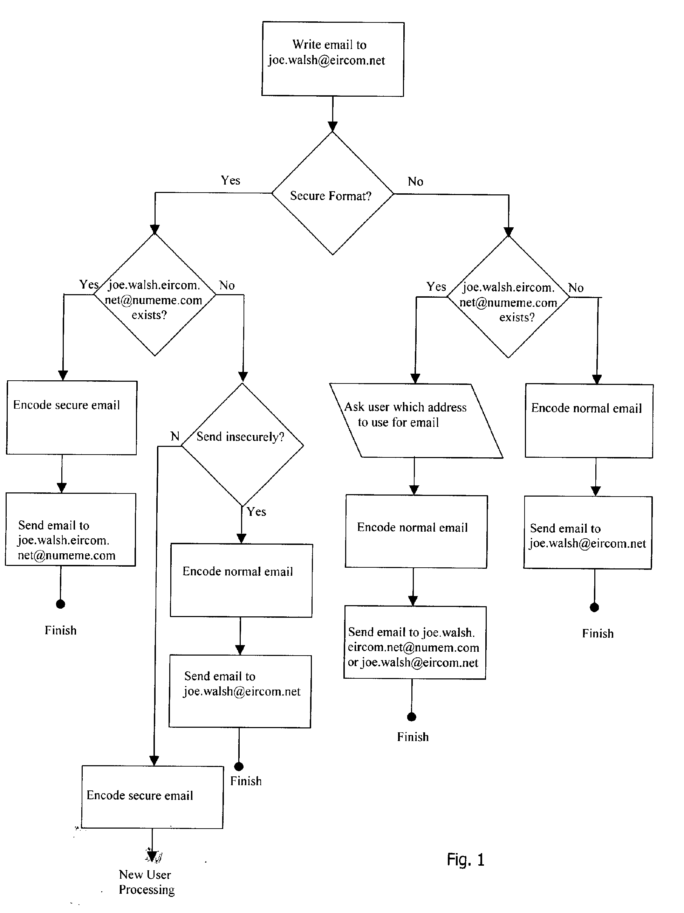

A common problem with web-based email systems is that every system provides the user with another email address. Users, quickly, acquire a number of email addresses and passwords which must be memorised. The system of the invention uses a novel method of address mapping to avoid users having to remember yet another email address when using the system. We use their existing email address (e.g. joe.smith@mydomain.com) as the primary part of their email address (e.g. joe.smith.mydomain.com@numeme.com). This allows for email addresses to be mapped in both inbound and outbound directions in the email client software which in turn enables users to enter a recipient's known regular email address and send them secure email. Address processing is illustrated in Fig. 1.

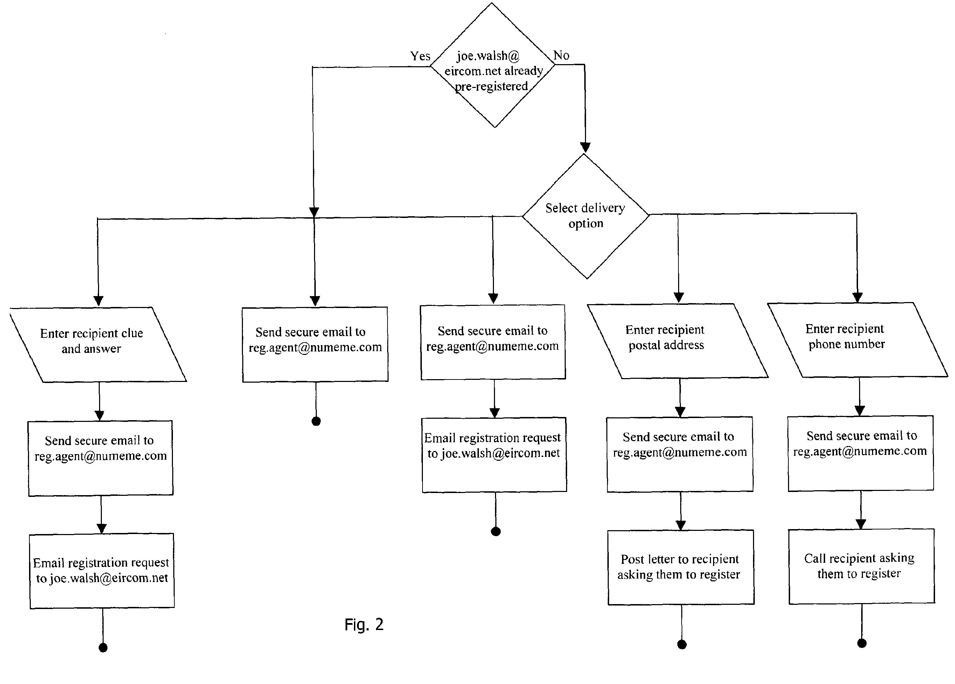

### New User processing (Fig. 2)

A common problem with web-based secure mail systems is that both sender and receiver must be registered before secure email can be exchanged between them. This is overcome as follows: the email is sent in secure format to the server where it is stored. A user account is set up for the recipient but no keys are generated and the user account is in a pre-registered state. When the recipient registers their keys are generated as normal on the client and stored in the user database. The server then takes all pending emails for that recipient, decrypts them with it's own private key, re-encrypts them using the recipient's actual public key and delivers them to the user's mailbox.

When the sender initially sends the secure email above, the recipient may not know that secure email is waiting for them and so must be notified. There are five notification options with decreasing levels of security:
1. sender contacts recipient by other means (e.g. telephone) and requests them to register.
2. sender enters password and clue, the recipient must know the password to register, an email is automatically sent to the recipient's regular email address with the clue, asking them to register.
3. NuMeme physically posts (mails) registration request to recipient.
4. NuMeme phones recipient requesting them to register.
5. NuMeme sends email to recipient asking them to register.

Note that none of these options is as secure as the recipient registering before email is sent to them.

### Client Framework

Prior web-based clients have an awkward user-interface. Selection of files or an address, require a different web page to be opened which is slow and cumbersome. The invention provides a user-interface similar to PC-based client software using windows, buttons and menus.

Typically JAVA applets are used to provide some user-interface functionality such as displaying graphics or animations or showing data entry forms to a user. An applet is displayed as a Java Panel inside the browser and it can contain items such as buttons, labels, text fields and list boxes. It cannot be detached from the browser, cannot have a title bar or menus and cannot be resized. Therefore it provides a cumbersome and limited user interface. However, the applet can also be used as a foundation from which to launch user applications.

A toolkit of user-interface primitives including windows, frames, buttons, multi-column lists, button bars and dialog boxes is downloaded with the applet. A client application can then call these primitives to display information to the user, accept user input or process data. The novel aspect of this approach is that the web-page with the applet is then not required for the display of information but simply provides a platform for the applications running on it and to provide a communications channel between the client application and the server. This in turn, enables a structurally complex user-interface to be presented to the user allowing them to access information and perform actions in an intuitive manner. The user-interface primitives can also be stored on the server and downloaded to the client application as needed.

The Client framework is designed to provide a standard set of cryptographic and user-interface functions on top of which, new services can be easily built. The framework consists of a number of elements as follows:
1. SSL is used between the client and server to validate the server identity and thereby prevent masquerading by another server and potentially providing insecure or malicious software. This also protects against "man-in-the-middle" attacks which could compromise the session key.
2. The actual software downloaded to the client is sent as a signed CAB (Microsoft™) or JAR™ (Netscape™, Sun™) file to ensure that the software downloaded by the client is actually that provided by the supplier and has not been replaced or altered.
3. The contents of the signed CAB or JAR file provide all the necessary support to provide both general-purpose and business-specific security services applications. The file contents are:
   a. A GatekeeperApplet class which provides an execution context for the application or applications.
   b. A CommsManager class which provides cryptographically secure protocol, session management and key management functions for use by applications.
   c. A library of cryptography classes providing primitive cryptographic functions. This library is used by the CommsManager and is also available for use by applications. However, it is not necessary to use this library in order to build secure applications.
   d. Built-in secure registration and logon protocols which can be used "as-is" or extended by applications.
   e. A library of advanced GUI components such as multi-column list boxes, graphic buttons, button bar, dialog boxes, layout managers, etc. which are available for use by application developers to rapidly build new user interfaces.
   f. One or more applications such as secure email, secure file manager and address book/contact manager. New applications providing other general-purpose or business-specific services will be included in this group.
   g. A standard extensible interface (the Launcher class) between applications and the framework, enabling new applications to be developed without requiring modification to the framework.
   h. A standard extensible interface (the Protocol class) between protocols and the framework enabling new protocols to be developed without requiring modification to the framework.
   i. A standard extensible mechanism enabling inter-application communication. This allows applications to send commands to other running applications which have the ability to then accept or reject the command. An example of this would be to create a new mail message pre-addressed to a recipient. Such a command can only be implemented by an email application but it could be requested by an address book application.
   j. A standard extensible mechanism providing secure communication of arbitrary messages between applications and the server. This enables applications to send information to the server and receive information from it in a cryptographically secure manner without the framework requiring knowledge of the data to be carried. This enables new applications with their application-specific data and commands to be built without requiring modification of the framework.
4. A Gatekeeper servlet which runs on the web-server or associated application server and provides the server-side framework functions such as: user registration, logon, key management, session management, protocol handling, cryptography and user management. This servlet supports an extension mechanism enabling application-specific commands or requests to be passed to external server modules for processing. This feature enables applications which require new server-side functions to be built without requiring modification to the framework.
5. A cryptographically secure user management system which enables applications to control access to functionality by user or group-of-users. For example, all users may have access to local secure file-storage but only corporate users may have access to remote file storage.

To build a new application, the developer will write software which implements the desired application functionality by including the NuMeme framework as a library. The new application can then use the NuMeme protocol, communications, user-interface and cryptographic functions without having to develop them from the beginning. This allows application developers to focus on the specific requirements of their application and not worry about low-level cryptography, protocol or user-interface component design. If the new application requires unique server-side functions such as access to a legacy system or proprietary database, the developer will write a software module conforming to the servlet extension interface. The new application can then access new server functions without modification of the framework.

The client must have access outside the JAVA sandbox in order to access essential system functions such as reading/writing disk files for managing attachments, print queues for printing messages, and the system clipboard for cut&paste operations. This is achieved by using the "Authenticode" security features built into Microsoft's Internet Explorer and the similar security mechanism built into Netscape Navigator. In each case the mail applet and supporting files are embedded in a signed archive (CAB for IE, JAR for Navigator). When the browser downloads the archive, the user is asked to approve the access by the applet to restricted functions. The user is notified that the software has been signed by the company providing it.

When the mail client starts, the inbox is shown. From there users may open messages, print messages, reply to messages, forward messages or compose new messages. They may also save message attachments or messages themselves to disk. The interface provides a highly intuitive, easy-to-use GUI, thereby removing a major objection to web-based mail, which is the awkward interface and poor user experience it provides.

When the file management client starts, the directory trees of the local machine and the user's server-based remote-storage are shown. All files stored on the server are encrypted by default using a random session key which in turn is encrypted with the user's public key and included in the file. Files stored on the server are thereby protected and can only be accessed with the user's private key. Obvious extensions to this invention are to store the encrypted session key in a separate file locally or on the server. The interface provides a highly intuitive, easy-to-use GUI, thereby removing a major objection to web-based storage, which is the awkward user interface and poor user experience it provides.

### Applet-Servlet Protocols

This section describes the protocols (sequence of messages exchanged) during registration, logon and key escrow. In particular Diffie-Hellman is used to generate a one-time session-key, which is then used to Triple-DES encrypt any sensitive data communicated between the applet and servlet. As set out above, there are three private key storage schemes used. Depending on the scheme used, different actions occur during some protocol steps.

In addition, time-varying authentication may be employed. This is shown table 2b below. Finally a number of other client-server messages may be exchanged during client operation. These are shown in table 4 below.

### Protocol between client and server during user registration.

**Table 1**

| Registration Protocol | | | |
|---|---|---|---|
| **Step** | **Client PC** | **Security** | **Server** |
| 1. | Connect to website | SSL | Send JAVA Applet |
| 2. | Start applet | | |
| 3. | Send "Hello" | SSL | Generate & send unique Session ID |
| 4. | Compute & send DH (X) | SSL | Compute & send DH (Y) Compute & store DH session key |
| 5. | Compute & store DH session key | | |
| 6. | Send username | 3-DES | Check if unique and send OK/Error, If OK store username. |
| Note that the client can automatically select a specific storage protocol or the user may select this. Depending on the scheme selected, one of steps 8a, 8b or 8c occurs. | | | |
| 7. | If Error received stay in step 4, else send SHA1 hash of password and private-key storage scheme identifier. | 3-DES | Store SHA1 hash of password and private key storage scheme identifier. If identifier is b or c, send domain-owner public key. |
| 8a. | Generate RSA key-pair. Encrypt private key with multiple (8 times) SHA1 hash of password Send public key & encrypted private key. | 3-DES | Store public key, encrypted private key and SHA1 hash of password in user database. Create email account on mail-server. Send OK message. |
| 8b. | Generate RSA key-pair. Encrypt user private key with domain-owner public key. Send public key & encrypted private key. | 3-DES | Store public key, encrypted private key and SHA1 hash of password in user database. Create email account on mail-server. Send OK message. |
| 8c. | Generate RSA key-pair. Encrypt private key with multiple (8 times) SHA1 hash of password and store to local file. Send public key & file. | 3-DES | Store public key, private key file and SHA1 hash of password in user database. Create email account on mail-server. Send OK message. |
| 9. | Display OK message and redirect web-browser to user login page. | | Delete user details info. from session database. |

**Table 2a.**

| Login Protocol (no time-varying authentication) | | | |
|---|---|---|---|
| **Step** | **Client PC** | **Security** | **Server** |
| 1. | Connect to website | SSL | Send JAVA Applet |
| 2. | Start applet | | |
| 3. | Send "Hello" | SSL | Generate & send unique Session ID |
| 4. | Compute & send DH (X) | SSL | Compute & send DH (Y) Compute & store DH session key |
| 5. | Compute & store DH session key | | |
| 6. | Send username and SHA1 hash of password. | 3-DES | Check if username exists and SHA1 hash of password is correct. Send OK/Error response. (Note that OK response contains user's private-key storage scheme identifier.) |
| Depending on the private-key storage scheme in use, one of steps 7a, 7b or 7c occurs. | | | |
| 7a. | Request private key. | 3-DES | Send encrypted private key. |
| 7b. | Request private key. | 3-DES | Decrypt user private key using domain owner private key and send unencrypted user private key. |
| 7c. | Read file containing encrypted private key. | N/A | |
| 8. | Launch client application(s). | | |

**Table 2b**

| Login Protocol (time-varying authentication) | | | |
|---|---|---|---|
| **Step** | **Client PC** | **Security** | **Server** |
| 1. | Connect to website | SSL | Send JAVA Applet |
| 2. | Start applet | | |
| 3. | Send "Hello" | SSL | Generate & send unique Session ID |
| 4. | Compute & send DH (X) | SSL | Compute & send DH (Y) Compute & store DH session key |
| 5. | Compute & store DH session key | | |
| 6. | | 3-DES | Send random value |
| 7. | Send username and SHA1 hash of (SHA1 hash of password and random value). | 3-DES | Check if username exists and SHA1 hash of (SHA1 hash of password and random value) is correct. Send OK/Error response. (Note that OK response contains user's private-key storage scheme identifier.) |
| Depending on the private-key storage scheme in use, one of steps 8a, 8b or 8c occurs. | | | |
| 8a. | Request private key. | 3-DES | Send encrypted private key. |
| 8b. | Request private key. | 3-DES | Decrypt user private key using domain owner private key and send unencrypted user private key. |

| | | | |
|---|---|---|---|
| 8c. | Read file containing encrypted private key. | N/A | |
| 9. | Launch client application(s) | | |

### Key Escrow - Key Retrieval Protocol

When the user is configured for local private-key storage, they may choose to use the key escrow service. In this case, they may download a copy of their private key file from the server. Time-varying authentication is always used in this protocol.

**Table 3**

| Key Escrow - Retrieval Protocol | | | |
|---|---|---|---|
| **Step** | **Client PC** | **Security** | **Server** |
| 1. | Connect to website | SSL | Send JAVA Applet |
| 2. | Start applet | | |
| 3. | Send "Hello" | SSL | Generate & send unique Session ID |
| 4. | Compute & send DH (X) | SSL | Compute & send DH (Y) Compute & store DH session key |
| 5. | Compute & store DH session key | | |
| 6. | | 3-DES | Send random value |
| 7. | Send username and SHA1 hash of (SHA1 hash of password and random value). | 3-DES | Check if username exists and SHA1 hash of (SHA1 hash of password and random value) is correct and private-key storage scheme identifier is 'c' Send OK/Error response. |
| 8a. | Request copy of key file. | 3-DES | Save key file to floppy disk. Mail to user. |
| 8b. | Request copy of staff-member private key. | 3-DES | Send encrypted private key to client. |
| 9b. | Decrypt staff-member private key with corporate entity private key. Encrypt staff-member private key with password. Store encrypted staff-member private key to disk. | | |

In order to perform all the available client actions the client PC must communicate with the server. The following table lists the other messages that are used to exchange information between the client applet and the servlet.

**Table 4**

| Other Applet-Servlet Messages | | |
|---|---|---|
| **Applet (client PC)** | **Security** | **Servlet (server)** |
| **Security Commands** | | |
| Request user public key. (Note zero, one & two-dimension user array forms of this request exist) | SSL | Send array of user public keys. Indicate if a key does not exist which may be the case for some valid email recipients. |

| **Mail Commands** | | |
|---|---|---|
| Request Inbox Contents | SSL | Send user's inbox summary |
| Request Message Contents | SSL | Get message contents from mail-server. Convert form MIME format into proprietary format for efficient transmission. If message is secure send complete message, else send message without attachment binary data. |
| Request Message Attachment | SSL | Send contents of specific attachment of specific message. |
| Request user public key. (Note one & two-dimension user array forms of this request exist) | SSL | Send array of user public keys. Indicate if a key does not exist which may be the case for some valid email recipients. |
| Send Message | SSL | Translate message into MIME format and send to mail-server using SMTP. Return OK/Error response. |
| Set message read | SSL | Set "read" flag of specified message in user's inbox on mail server. |
| Delete message | SSL | Delete specified message from user's inbox on mail server. |

| **File Commands** | | |
|---|---|---|
| Request Directory Tree Contents | SSL | Send user's directory tree summary |
| Request File Contents | SSL | Get file contents from file-server and send to client. |
| Store File Contents | SSL | Receive directory pathname and file contents and store in specified sub-directory on server. Send OK/Error response. Note that an error response can be given if the user has insufficient free space on the server. |
| Delete File | SSL | Delete specified file on server. Return OK/Error response. |
| Rename File | SSL | Rename specified file on server. Return OK/Error response. |
| Create Directory | SSL | Create directory on server. Send OK/Error response. |
| Delete Directory | SSL | Delete directory contents and then directory on server. Return OK/Error response. |
| Rename Directory | SSL | Rename specified directory on server. Return OK/Error response. |

### Sending & Receiving Normal Email

When a user requests a normal (non-secure) email to be opened, the mail applet sends a request to the mail servlet for the message contents ("Request Message Contents" function in Table 3). The message contents (except for attachment data) are sent back by the mail servlet. The mail applet then fills the relevant fields in a dialog box and displays the message. If the user requests that the message attachments be saved, the mail applet requests the contents (binary data) of each attachment one at a time ("Request Message Attachment" function in Table 4). The mail servlet sends the contents of the specified attachment to the mail applet. The mail applet then provides the user with a "Save File" dialog box for each attachment in turn, to allow selection of the directory and filename where the attachment is to be stored.

When a user is composing an email and attaches a file, a "File Load" dialog is displayed, allowing the user to navigate through directories and select a file. The disk, directory and filename are saved and the filename displayed but the file contents are not read at this time. When the user sends the message, the address of each recipient is first verified, to ensure that it is a valid email address. Next the contents of each attachment (if any) are read. Then, the complete message is sent to the servlet using the "Send Message" function in Table 4 above. The servlet formats the email message into MIME format and submits it to the mail server using SMTP.

### Secure Mail Message Format

It is assumed that the reader is familiar with the basic theory of digital signatures, encryption and Internet email message formats.

A secure message consists of a message envelope, a subject "Encrypted Message", body text indicating that this is a secure message protected by the security mechanisms and two attachments: a content attachment and a manifest attachment. The manifest attachment contains a triple-DES key which is RSA encrypted using the recipient's public key. The content attachment contains the unencrypted message which has been Triple-DES encrypted with the key stored in the manifest. There are two proprietary MIME headers used in the envelope:
- X-NuMemeAttachment used to indicate if the unencrypted message contains attachments
- X-NuMemeContent to indicate if the message is signed-only, encrypted-only or signed&encrypted. Currently only the signed&encrypted value is used.

### Sending a Secure Message

When a user is composing an email and attaches a file, a "File Load" dialog is displayed, allowing the user to navigate through directories and select a file. The disk, directory and filename are saved and the filename displayed but the file contents are not read at this time. When the user sends the message, the address of each recipient is first verified, to ensure that it is a valid email address. Next the contents of each attachment (if any) are read from disk.

The message body-text and attachments (if any) are then signed using the originator's private key. Remember that the private key was obtained by the applet during the login protocol (see Tables 2a/2b above). The signature is then added to the message as a new attachment.

Next the mail applet obtains the public key of each recipient from the mail servlet using the "Request user public key" function described in Table 4 above. Note that some recipients may not have keys, in which case the user is presented with the choice of sending the message insecurely to those recipients. If so, a single message is sent unencrypted to all insecure recipients. The user also has the option of sending the message securely to such a recipient where it is actually sent to the server and then a message sent to the recipient, requesting them to register. If there are any secure recipients, a random triple-DES key is then generated and the complete message contents are encrypted using this key. This forms the content attachment described in the previous section.

Next a new message is generated for each secure recipient in turn. The content attachment is added to this new message; the triple-DES key is then encrypted using that recipient's public key and added to the new message as a manifest attachment. The message is then sent using the "Send message" function described in Table 4 above.

Note that this means that a separate message is sent to each secure recipient and a single message is sent to all insecure recipients. Once the message is sent to the mail servlet, the processing is exactly the same as for a normal message, described above.

### Reading a Secure Message

When a user opens a secure message, the steps are as follows. First, the mail applet sends a request to the mail servlet for the message contents. The message contents *including the attachment data* are sent back by the mail servlet.

The mail applet has obtained the user private key during the login protocol described above. This private key is used to decrypt the manifest attachment giving a triple-DES key. The mail applet then decrypts the content attachment using the triple-DES key just obtained. The format of the resulting data is then checked to ensure that it is a valid message. If this check fails the user is informed that either the message contents were altered or that the user is not the intended recipient (i.e. the manifest was decrypted with an incorrect private key, giving an incorrect triple-DES key which in-turn gives incorrect decrypted data).

The decrypted message contains a signature that is now verified. The mail applet obtains the originator's public key from the server using the "Request user public key" function described in the table above. This key is used to verify the signature attached to the message. If this signature fails the user is informed that the message contents were not signed by the supposed originator of the message, thus providing authentication and non-repudiation. Another reason for the signature check to fail is that the message contents were altered, however in practice this cannot occur as the signature is wrapped in the encrypted content but it is included for future use (i.e. signed-only messages). The signature attachment is then removed from the message giving the unencrypted message composed by the originator. The mail applet then fills the relevant fields in a dialog box and displays the message. If the user requests that the message attachments be saved, the mail applet provides the user with a "Save File" dialog box for each attachment in turn, to allow selection of the directory and filename where the attachment is to be stored.

### Encrypting and Decrypting Files

The file management software has been designed with a windowed interface to provide a highly-intuitive, user-friendly, familiar user experience. The user will typically have one or more local disks/storage media along with a virtual disk on a server. When the client starts, a window showing local and remote (i.e. server-based) directory trees and files is displayed. The user may encrypt and/or decrypt local files. The user may delete or rename local or remote files and directories. The user may also move or copy files between the local and remote directories.

When the user elects to move or copy an unencrypted file from a local directory to a remote directory, the file is automatically encrypted thereby ensuring that all files stored on the directory are secure. When the user elects to move or copy a file from a remote directory or a local directory, they are given the option of decrypting the file automatically. If an unencrypted file is named "filename.ext", it's encrypted version is named "filename.ext.NEF". Similarly, when a file called "filename.ext.NEF" is decrypted, the decrypted version is saved as "filename.ext" by default.

The file encryption process is as follows. The user selects a file (or files) and executes the encrypt command. Alternatively, this occurs automatically if the user moves or copies a file from a local to a remote directory. For each file (e.g. "filename.ext") selected the following steps occur in the client application:
1. if a file called "filename.ext.NEF" exists, the user is prompted to overwrite it, select a different name by which to save the encrypted file or cancel the operation.
2. an output file with the name chosen in step 1 is created.
3. a random Triple-DES key is generated.
4. the key generated in step 3 is encrypted with the user's public key and written to the file.
5. the input file is read, encrypted using the key generated in step 3 and written to the output file.
6. a running hash is kept of all data read from the input file in step 5. This hash is now encrypted with the users private key and written to the output file. The decryption process for a file called "filename.ext.NEF" is as follows:

1. if a file called "filename.ext" exists, the user is prompted to overwrite it, select a different name by which to save it or cancel the operation.
2. a temporary filename is generated and the file created.
3. the first field of the encrypted file is read and decrypted with the user's private key yielding a random Triple-DES key.
4. the rest of the file is read, Triple-DES decrypted using the key extracted in step 3 and written to the temporary output file.
5. the signature field of the encrypted file is read and decrypted with the user's public key. This is compared to a hash value calculated on the data written to the output file. If the signature is not correct, the user is warned and the operation aborted.
6. the temporary file is renamed to the filename selected in step 1.

### Planned Extensions

### Infrastructure Hardware

In a production environment, the web-server and mail-server software would run on separate hardware platforms and would be connected to the Internet through a standard router and firewall configuration. As the volume grows, the web and mail-server applications would themselves be distributed to each run on multiple boxes. The next stage of growth would be to distribute the applications geographically, both to increase volume and to provide disaster-recovery.

### Infrastructure Software

As volume increases, it will probably be required to use a relational database for storing user information. This may also require moving to an EJB-based software architecture. An LDAP directory will also be required in order to assist in managing the distribution of applications over multiple boxes. While the current platform uses the N-Plex mail-server from Critical Path, support will be added for multiple mail servers, in particular the products from iPlanet and Software.com. In addition, use of an application server to increase performance is planned.

### Corporate & Personal Products

An obvious extension of this technology is to provide a corporate product that acts as a gateway between the company's internal mail system and the Internet. It would function in a similar fashion to that described above, however, the mail-server would actually be the company's internal mail-server.

When a user logs in, the gateway would present an inbox summary as before. However, when a user opens an email, rather than transferring the email as is, the gateway would first encrypt the email as described above, before sending it to the user. This gives a mobile use secure access to internal corporate mail.

The personal product is designed to provide the services described above while enabling the user to continue to use their preferred mail client on their workstation. It acts like the mail client described above but does not have a GUI. Instead it presents an SMTP/IMAP interface that can be accessed by an installed email client such as Outlook Express, Eudora, Netscape, Communicator etc.

Similarly, a corporate product providing secure access to files on the corporate network will be implemented.

### S/MIME Compatibility

The solution implemented uses RSA for email signing & message key encryption and Triple-DES for message encryption. There is a standard for a secure email format called S/MIME that uses RSA and Triple-DES. Our implementation is similar but not identical to S/MIME. In particular, S/MIME requires support for multiple encryption algorithms (RC" & Triple-DES) and allows a maximum RSA key-length of 1024 bits. For details, see: http://rfc.eunet.fi/rfc1847.txt http://rfc.eunet.fi/rfc2311.txt http://rfc.eunet.fi/rfc2312.txt http://rfc.eunet.fi/rfc2633.txt http://rfc.eunet.fi/rfc2634.txt.

We plan to implement complete S/MIME support, thereby providing inter-operability with Outlook Express, Netscape Communicator and other S/MIME clients.

### Handheld Platform

The solution described provides web-based access to a variety of security servers. JAVA Virtual Machines (JAVA VMs) are now available on many platforms including Personal Digital Assistant (PDA) devices, mobile phones and other handheld devices. It is our intention to implement client applications for handheld devices using this invention. Connectivity between the handheld device and the server(s) is provided by the existing handheld device TCP/IP software. In the handheld device client application, the primary means of key storage will be local storage. However, dynamic download of a password-encrypted private key will also be supported for regular and key-escrow use.

The invention is not limited to the embodiments described but may be varied in construction and detail.

## Claims

1. A method for managing secure communication services in a client/server environment, the method comprising the steps of:-
the server downloading a program to the client and the client using said program to communicate with the server to avail of secure services.

2. A method as claimed in claim 1, wherein the program is a Java applet, and the server operations are according to Java servlets.

3. A method as claimed in claim 1 or 2, wherein a session key is generated for encryption of sensitive data communicated between the client and the server.

4. A method as claimed in claim 3, wherein both the client and the server generate and send a one-time session key.

5. A method as claimed in claim 4, wherein the session key is generated according to the Diffie-Hellman algorithm.

6. A method as claimed in any preceding claim, wherein the client allows the user to select one of a plurality of options for obtaining a private key.

7. A method as claimed in claim 6, wherein the options are:
(a) the client generating and encrypting a private key and sending to the server for storage;
(b) the client generating a private key, transmitting it to the server, and the server storing it; and
(c) the client generating, encrypting, and storing a private key.

8. A method as claimed in claim 7, wherein option (c) comprises the further step of the client transmitting the encrypted private key to the server for an escrow service.

9. A method as claimed in any preceding claim, wherein the client allows the user to select one of a plurality of options for obtaining a public key.

10. A method as claimed in any preceding claim, wherein the options are:
(c) the server sending the public key in a plain format, and
(d) the server sending the public key as a key certificate and wherein the key data is signed.

11. A method as claimed in any preceding claim, wherein the server transmits a random value to the client during login or other sensitive operation, and the client uses said value to transmit a password to the server to provide time-varying authentication.

12. A method as claimed in any preceding claim, wherein the secure service is an email messaging service.

13. A method as claimed in any preceding claim, wherein the server maps a user's existing email address to a new address.

14. A method as claimed in any preceding claim, wherein the server allows a message to be sent to a non-registered recipient by registering after the sender sends the message.

15. A method as claimed in claim 14, wherein the server establishes a pre-registered state for the recipient.

16. A method as claimed in claim 15, wherein the server stores pending messages for the pre-registered state in encrypted form.

17. A method as claimed in any of claims 14 to 16, wherein the server notifies the recipient of pending messages using a separate link.

18. A method as claimed in any preceding claim, wherein the client is a handheld device such as a personal digital assistant (PDA) or mobile phone.

19. A method as claimed in any preceding claim, wherein the secure service is a secure data storage service.

20. A method as claimed in any preceding claim, wherein the downloaded program is used by the client to generate a user interface of a type similar to that of a substantial located application such as an email messaging application, and wherein the program comprises a toolkit of user interface primitives such as windows, frames, buttons, multi-column lists, button bars, and dialog boxes, and a client application calls these primitives.

21. A method as claimed in any preceding claim, wherein the program is a secure communications program which makes secure communication functions available to applications.

22. A method as claimed in claim 21 in which an application sends data to a client communication manager, which in turn communicates securely with a sever communications manager, which in turn processes the application data itself or passes it to another server module.

23. A method of operating in a client/server environment comprising the steps of using an applet downloaded to a client web-browser for launching one or more windowed applications.

24. A method as claimed in claim 23 wherein the applications launched are determined by user registration details.

25. A method as claimed in claims 23 or 24, wherein functions available to an application are determined by user registration details.

26. A method of operating a client system in a client/server environment, the method comprising the steps of:-
the client system downloading a library containing user-interface components, and
the client also downloading one or more applications which call said components and use them to generate user displays.

27. A method as claimed in claim 26, wherein:-
the client downloads a library containing some or all of cryptographic primitive functions, user-interface components, protocol primitive functions, session-management functions and cryptographic key-management functions, and
the client also downloads one or more applications which call said library functions and use them to provide cryptography-based services

28. A method as claimed in claim 27, wherein the library functions are embedded in an application.

29. A server comprising means for performing server operations in a method as claimed in any preceding claim.

30. A computer program product comprising software code for performing the steps of any of claims 1 to 29 when executing on a digital computer.
